# EUROPEAN PATENT SPECIFICATION

(11) **EP 3 095 680 B1**
(45) Date of publication and mention of the grant of the patent: **01.05.2019**
(21) Application number: 14878872.2
(22) Date of filing: 26.11.2014
(51) Int. Cl.: B62D 25/10, B60R 21/38

(54) **VEHICLE POP-UP HOOD DEVICE**
FAHRZEUGAUFSTELLHAUBENVORRICHTUNG
DISPOSITIF DE CAPOT DE SURGIR DE VÉHICULE

(30) Priority: 16.01.2014 JP 2014005745
(43) Date of publication of application: 23.11.2016
(73) Proprietor: TOYOTA JIDOSHA KABUSHIKI KAISHA, Toyota-shi, Aichi-ken 471-8571 (JP)
(72) Inventor: NARITA, Sohtaro, Toyota-shi Aichi-ken, 471-8571 (JP); FUKASAWA, Akihito, Toyota-shi Aichi-ken, 471-8571 (JP)
(74) Representative: Winter, Brandl, Fürniss, Hübner, Röss, Kaiser, Polte - Partnerschaft mbB
(86) International application number: PCT/JP2014/081289
(87) International publication number: WO 2015/107778

(56) References cited:
- EP-A2- 1 470 971
- FR-A1- 2 878 213
- JP-A- 2008 056 120
- JP-A- 2009 262 853
- JP-A- 2010 236 637
- JP-A- 2011 051 366
- JP-A- 2011 208 738
- JP-A- 2011 208 738
- US-A1- 2009 266 638

## Description

### Technical Field

The present invention relates to a vehicle pop-up hood device.

### Background Art

Patent document 1 listed below discloses an actuator that pushes up both vehicle width direction end portions of a rear end portion of a hood. The actuator is configured as a so-called piston cylinder type. Additionally, upon actuation of the actuator, a piston rod is raised to a completely raised position (a lock position), and retraction of the piston rod with respect to the cylinder is limited by a lock mechanism. It should be noted that other examples of actuators include the one disclosed in patent document 2 listed below, and examples of vehicle pop-up hood devices that use an actuator to push up a hood include the ones disclosed in patent document 3 and patent document 4 listed below.

### Citation List

### Patent Literature

Patent Document 1: JP-A No. 2009-262853
Patent Document 2: JP-A No. 2011-208738
Patent Document 3: JP-A No. 2009-67303
Patent Document 4: JP-ANo. H11-263191

Patent Document 2 discloses: a vehicle pop-up hood device comprising: a pair of actuators respectively having a piston rod that, upon actuation, becomes extended from a cylinder toward the vehicle upper side and is configured to push up both vehicle width direction end portions of a hood; and a lock mechanism that is disposed in the respective actuator and comprises a housing groove portion formed along the circumferential direction of a piston portion is formed in an outer peripheral portion of the piston portion, wherein a lock ring made of metal having an annular shape is configured to be elastically deformable in its radial direction and is housed in the housing groove portion in a diameter-reduced state, and whereby the lock mechanism is configured to deter movement of the piston rod toward the vehicle lower side as a result of the lock ring being placed in a lock position.

### SUMMARY OF INVENTION

### Technical Problem

However, the actuator described above has the problem that, in relation to oscillation of the hood that occurs when the hood has been pushed up, the amount of time until the oscillation decays is long. That is, when both vehicle width direction end portions of the hood have been pushed up, displacement of both vehicle width direction end portions of the hood is regulated but displacement of the vehicle width direction central portion of the hood is not regulated. Furthermore, when both vehicle width direction end portions of the hood are pushed up, the vehicle width direction central portion of the hood becomes displaced toward the vehicle upper side later than both vehicle width direction end portions of the hood due to the force of inertia. For this reason, the hood oscillates in such a way that, seen from the vehicle rear side, both vehicle width direction end portions of the hood become nodes and the vehicle width direction central portion of the hood becomes an antinode. Additionally, the oscillation that has occurred in the hood is gradually damped, so the amount of time until the oscillation decays is long.

In consideration of the circumstances described above, it is an object of the present invention to provide a vehicle pop-up hood device that can damp, at an early stage, oscillation of the hood that occurs when the hood is pushed up.

### Solution to Problem

This object is solved by the subject matter of claim 1. Further embodiments are disclosed in the subclaims. A vehicle pop-up hood device pertaining to a first aspect comprises: an actuator having a piston rod that, upon actuation, becomes extended from a cylinder toward the vehicle upper side and pushes up both vehicle width direction end portions of a hood; and a lock mechanism that is disposed in the actuator, has a retention groove portion that temporarily retains in a retention position via a lock ring the piston rod extended from the cylinder, and deters movement of the piston rod toward the vehicle lower side as a result of the lock ring being placed on the lower end side of the cylinder with respect to the retention groove portion in a lock position on the vehicle lower side of the retention position.

In the vehicle pop-up hood device pertaining to the first aspect, when the actuator is actuated, the piston rod becomes extended from the cylinder toward the vehicle upper side and both vehicle width direction end portions of the hood are pushed up by the piston rod.

Here, the lock mechanism is disposed in the actuator. The lock mechanism has the retention groove portion that temporarily retains in the retention position via the lock ring the piston rod extended from the cylinder, and the lock mechanism is configured to deter movement of the piston rod toward the vehicle lower side as a result of the lock ring being placed on the lower end side of the cylinder with respect to the retention groove portion in the lock position on the vehicle lower side of the retention position. For this reason, when the actuator is actuated, the piston rod is raised to the retention position, and in the retention position the piston rod (i.e., both vehicle width direction end portions of the hood) is temporarily retained.

When both vehicle width direction end portions of the hood are pushed up by the piston rod, the vehicle width direction central portion of the hood becomes displaced toward the vehicle upper side later than both vehicle width direction end portions of the hood due to the force of inertia. Furthermore, the displacement of the vehicle width direction central portion of the hood in the up and down direction is not regulated, so the hood tends to oscillate in such a way that both vehicle width direction end portions of the hood become nodes and the vehicle width direction central portion of the hood becomes an antinode. Additionally, when the vehicle width direction central portion of the hood has become displaced to bottom dead center (the point at which the vehicle width direction central portion of the hood goes from being displaced toward the vehicle lower side to being displaced toward the vehicle upper side) or near bottom dead center, the state in which the piston rod is temporarily retained by the lock mechanism becomes cancelled and thus both vehicle width direction end portions of the hood become displaced to the lock position on the vehicle lower side. Because of this, strain in the hood is eliminated at the point in time when the oscillation speed of the hood becomes substantially zero, and the hood becomes substantially horizontal. As a result, the amplitude of the hood is reduced, so the oscillation of the hood that occurs when the hood is pushed up can be damped at an early stage.

A vehicle pop-up hood device pertaining to a second aspect is the first aspect, wherein the piston rod is configured to include a rod portion that pushes up the hood.

In the vehicle pop-up hood device pertaining to the second aspect, the lock ring is housed in a diameter-reduced state in the housing groove portion formed in the piston portion of the piston rod. Additionally, when the piston rod rises to the retention position, the lock ring becomes fitted into the retention groove portion formed in the inner peripheral portion of the cylinder, and the piston rod becomes temporarily retained. For this reason, the efficiency with which the piston rod is temporarily retained in the retention position by the lock mechanism can be enhanced with a simple configuration.

A vehicle pop-up hood device pertaining to a third aspect is the second aspect, wherein a side surface on the vehicle lower side of the retention groove is a lower inclined surface, the lower inclined surface being inclined toward the lower end side of the cylinder heading inward in the radial direction of the cylinder as seen in a longitudinal sectional view.

In the vehicle pop-up hood device pertaining to the third aspect, the lower inclined surface configuring the side surface on the vehicle lower side of the retention groove is inclined toward the lower end side of the cylinder heading inward in the radial direction of the cylinder as seen in a longitudinal sectional view. When a predetermined load toward the vehicle lower side acts on the piston rod in the retention position, the lock ring fitted into the retention groove becomes elastically deformed in a direction in which its diameter is reduced along the lower inclined surface and the state in which the piston rod is temporarily retained becomes cancelled. For this reason, by appropriately setting the angle of inclination of the lower inclined surface, for example, the timing when the state in which the piston rod is temporarily retained by the lock mechanism becomes cancelled can be easily adjusted.

A vehicle pop-up hood device pertaining to a fourth aspect is the second or third aspect, wherein the lock mechanism has a lock groove portion formed in the inner peripheral portion of the cylinder along the circumferential direction of the cylinder, and in the lock position the lock ring becomes fitted into the lock groove portion.

In the vehicle pop-up hood device pertaining to the fourth aspect, in the lock position the lock ring becomes fitted into the lock groove portion formed in the inner peripheral portion of the cylinder. For this reason, movement, toward the vehicle upper side, of the lock ring that has been moved from the retention position to the lock position is prevented. Because of this, the lock ring that has moved from the retention position to the lock position can be kept from moving again toward the retention position side due to a rebound.

A vehicle pop-up hood device pertaining to a fifth aspect is the fourth aspect, wherein a side surface on the vehicle upper side of the housing groove portion is an inclined surface, the inclined surface being inclined toward the upper end side of the cylinder heading outward in the radial direction of the piston portion as seen in a longitudinal sectional view, and a side surface on the vehicle lower side of the lock groove portion is an orthogonal surface, the orthogonal surface being placed along a direction orthogonal to the axial direction of the cylinder as seen in a longitudinal sectional view.

In the vehicle pop-up hood device pertaining to the fifth aspect, in the lock position the lock ring becomes sandwiched by the inclined surface of the housing groove portion and the orthogonal surface of the lock groove portion, and movement of the piston rod toward the vehicle lower side is deterred. That is to say, the piston rod is, in the region of the inclined surface of the housing groove portion, brought into contact with the lock ring that has been brought into contact with the orthogonal surface of the cylinder. For this reason, the piston rod can be stably brought into contact with the lock ring fitted into the lock groove portion.

A vehicle pop-up hood device pertaining to a sixth aspect is the fifth aspect, wherein a head portion having a housing recess portion that opens toward the lower end side of the cylinder is secured inside the upper end portion of the cylinder, a step portion that opens inward in the radial direction of the cylinder and toward the lower end side of the cylinder is formed in an open edge portion of the housing recess portion, and the retention groove portion is formed in an inner peripheral surface of the housing recess portion and the lock groove portion is configured by the orthogonal surface and the step portion.

A vehicle pop-up hood device pertaining to a seventh aspect is the third aspect, wherein the lock mechanism has an orthogonal surface that is formed in the inner peripheral portion of the cylinder along the circumferential direction of the cylinder and is placed along a direction orthogonal to the axial direction of the cylinder as seen in a longitudinal sectional view, a head portion is secured inside the upper end portion of the cylinder, with a housing recess portion that opens toward the lower end side of the cylinder and whose open edge portion is placed adjacent to the orthogonal surface on the upper end side of the cylinder being formed in the head portion, and the retention groove portion is formed in an inner peripheral surface of the housing recess portion and in the lock position the lock ring becomes sandwiched between an inclined surface on the vehicle upper side of the housing groove portion and the orthogonal surface so that movement of the piston rod toward the vehicle lower side is deterred.

A vehicle pop-up hood device pertaining to an eighth aspect is the sixth or seventh aspect, wherein when the piston rod has been moved to the retention positon, the piston portion is brought into contact with a bottom surface of the housing recess portion. Advantageous Effects of Invention

According to the vehicle pop-up hood devices pertaining to the first aspect and sixth to eighth aspects, the oscillation of the hood that occurs when the hood is pushed up can be damped at an early stage.

According to the vehicle pop-up hood device pertaining to the second aspect, the efficiency with which the piston rod is temporarily retained in the retention position can be enhanced with a simple configuration.

According to the vehicle pop-up hood device pertaining to the third aspect, by appropriately setting the angle of inclination of the lower inclined surface, for example, the timing when the state in which the piston rod is temporarily retained by the lock mechanism becomes cancelled can be easily adjusted.

According to the vehicle pop-up hood device pertaining to the fourth aspect, rebounding of the lock ring that has moved from the retention position to the lock position can be prevented.

According to the vehicle pop-up hood device pertaining to the fifth aspect, the piston rod can be stably brought into contact with the lock ring fitted into the lock groove portion.

### BRIEF DESCRIPTION OF DRAWINGS

FIG. 1A is an explanatory drawing showing the state of a lock mechanism just after actuation of an actuator used in a vehicle pop-up hood device pertaining to an embodiment;
FIG. 1B is an explanatory drawing showing the state of the lock mechanism when a piston rod has moved from the state in FIG. 1A to a retention position;
FIG. 1C is an explanatory drawing showing the state of the lock mechanism when the piston rod has moved from the state in FIG. 1B to a lock position;
FIG. 2 is a plan view showing the overall configuration of the vehicle pop-up hood device pertaining to the embodiment;
FIG. 3 is an enlarged side view, seen from inside in the vehicle width direction, showing a pop-up mechanism portion placed on the vehicle right side in the vehicle pop-up hood device shown in FIG. 2;
FIG. 4 is a side view, seen from inside in the vehicle width direction, showing an actuated state of the pop-up mechanism portion shown in FIG. 3;
FIG. 5 is a sectional view showing the interior of the actuator shown in FIG. 3;
FIG. 6 is an enlarged sectional view showing the interior of an upper end portion of a cylinder just after actuation of the actuator shown in FIG. 4;
FIG. 7 is an explanatory drawing for describing, by means of a time series, the behavior of the hood when the hood has been pushed up by the actuator shown in FIG. 3;
FIG. 8A is a graph showing, in comparison with a comparative example, an oscillation waveform in the vehicle width direction central portion of the rear end portion of the hood when the piston rod shown in FIG. 3 has pushed up a hinge arm;
FIG. 8B is a graph showing, in comparison with the comparative example, an oscillation waveform in both vehicle width direction end portions of the rear end portion of the hood when the piston rod shown in FIG. 3 has pushed up the hinge arm; and
FIG. 9 an enlarged partial sectional view showing another example of the lock mechanism shown in FIG. 6.

### DESCRIPTION OF EMBODIMENT

A vehicle pop-up hood device 10 pertaining to an embodiment will be described below using the drawings. It should be noted that arrow FR appropriately shown in the drawings indicates a vehicle forward direction, arrow UP indicates a vehicle upward direction, and arrow RH indicates a vehicle rightward direction.

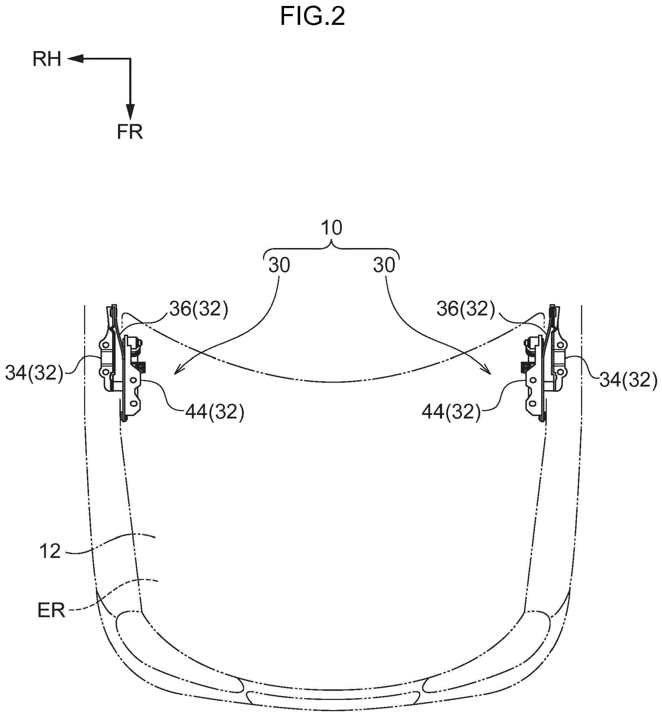

As shown in FIG. 2, the vehicle pop-up hood device 10 takes as main portions and is configured by a pair of pop-up mechanism portions 30 disposed in a hood 12 that opens and closes an engine compartment (a power unit compartment) ER. The pop-up mechanism portions 30 are disposed in both vehicle width direction end portions of the rear end portion of the hood 12, and the right and left pop-up mechanism portions 30 are both identically configured. For this reason, in the following description the pop-up mechanism portion 30 placed on the vehicle right side will be described and description of the pop-up mechanism portion 30 placed on the vehicle left side will be omitted.

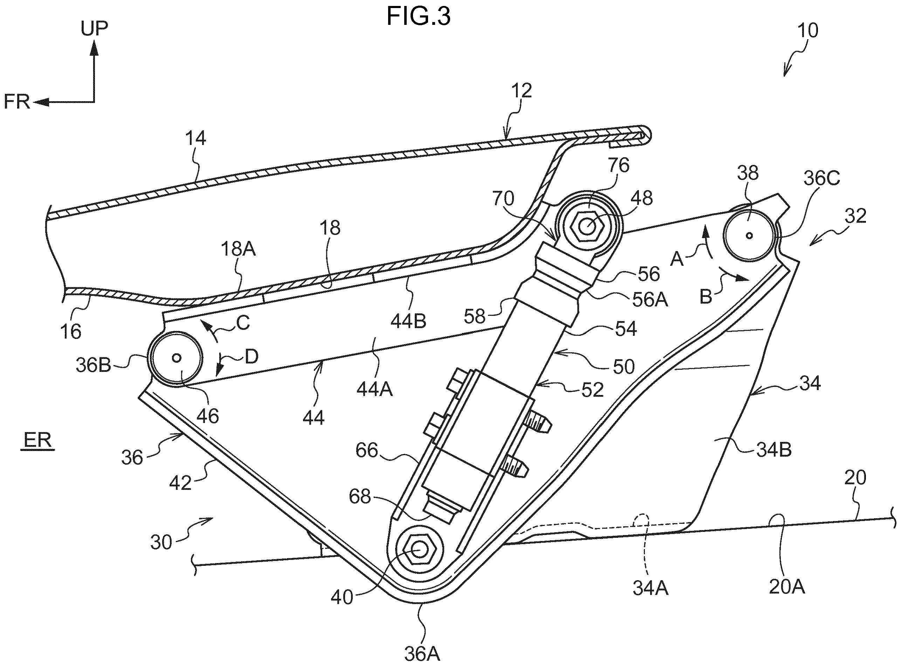

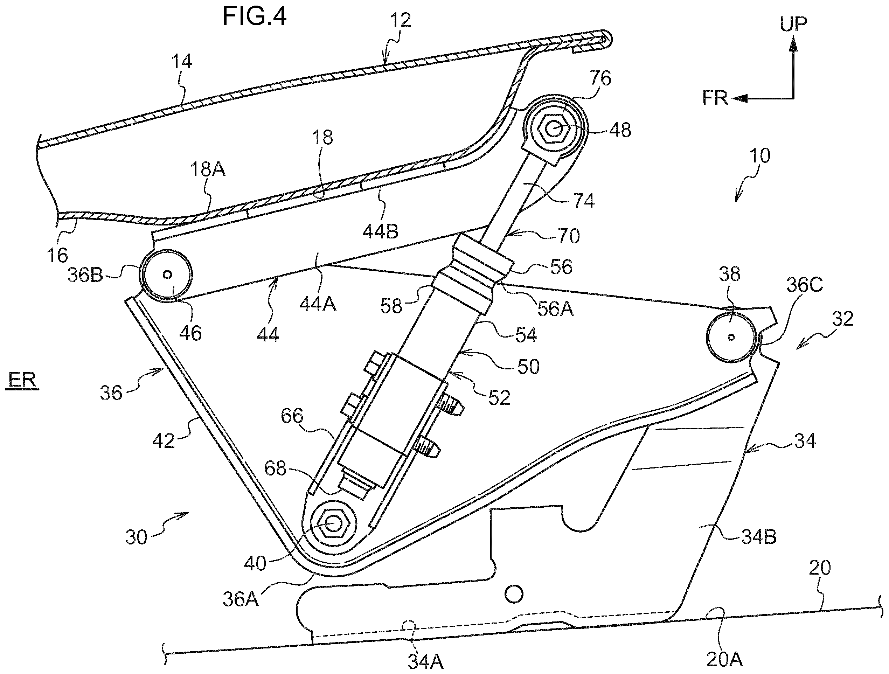

As shown in FIG. 3 and FIG. 4, the pop-up mechanism portion 30 is configured to include a hood hinge 32, which supports the hood 12 in such a way that the hood 12 can be opened and closed, and an actuator 50, which is actuated at the time of a collision with an impactor such as a pedestrian. Below, first the hood 12 will be described and then the configurations of each portion mentioned above will be described.

The hood 12 is configured to include a hood outer panel 14, which is placed on the vehicle outer side and configures a design surface, and a hood inner panel 16, which is placed on the engine compartment ER side and reinforces the hood outer panel 14. Additionally, the terminal portions of both are joined to each other by hemming. Furthermore, in a state in which the hood 12 is closing the engine compartment ER (the state shown in FIG. 3), the front end portion of the hood 12 is secured to the vehicle body by a hood lock not shown in the drawings.

Furthermore, a bulging portion 18 is formed in the rear end side (rear portion side) of the hood inner panel 16. The bulging portion 18 bulges toward the vehicle lower side (the engine compartment ER side) with respect to the hood inner panel 16, and a bottom wall 18A of the bulging portion 18 is placed substantially parallel to the hood outer panel 14 as seen in a side sectional view.

### (Regarding Hood Hinge 32)

As shown in FIG. 3 and FIG. 4, the hood hinge 32 is configured to include a hinge base 34 that is secured to the vehicle body, a swinging arm 36 that is rotatably coupled to the hinge base 34, and a hinge arm 44 that is secured to the hood 12. The hinge base 34 is formed in a substantially inverted L-shape as seen in a vehicle front view and is formed in a substantially V-shape (see FIG. 4 for details) that opens toward the vehicle upper side and obliquely forward as seen in a side view seen from inside in the vehicle width direction.

Furthermore, the hinge base 34 is equipped with a plate-shaped attachment portion 34A that extends along the vehicle front and rear direction. The attachment portion 34A is secured to an upper surface portion 20A of a cowl top side 20, which is a vehicle body-side constituent member, in such a way that its plate thickness direction coincides with the substantially vehicle up and down direction. It should be noted that the cowl top side 20 is disposed on both sides of a cowl that extends along the vehicle width direction between the rear end side of the hood 12 and the lower end portion of a windshield glass. Furthermore, the hinge base 34 is equipped with a support portion 34B, and the support portion 34B is bent toward the vehicle upper side from the vehicle width direction inside end portion of the attachment portion 34A and is formed in a plate shape whose plate thickness direction coincides with the substantially vehicle width direction.

The swinging arm 36 is placed on the vehicle width direction inner side of the hinge base 34 and is formed in a substantially inverted triangular plate shape as seen in a side view. Specifically, as seen in a side view the swinging arm 36 is formed in a substantially inverted triangular plate shape having as a vertices a lower end portion 36A, a front end portion 36B placed on the vehicle front side and the vehicle upper side of the lower end portion 36A, and a rear end portion 36C placed on the vehicle rear side and the vehicle upper side of the lower end portion 36A.

Furthermore, the rear end portion 36C of the swinging arm 36 is hinge-joined to the upper end portion of the support portion 34B of the hinge base 34 by a hinge pin 38 whose axial direction coincides with the vehicle width direction. Because of this, the swinging arm 36 is configured to be rotatable in the vehicle up and down direction (the direction of arrow A and the direction of arrow B in FIG. 3) using the hinge pin 38 as a rotational center.

Moreover, a coupling shaft 40 that rotatably supports the lower end portion of an actuator 50 described later is disposed in the lower end portion 36A of the swinging arm 36. The coupling shaft 40 is formed in a substantially cylindrical shape and projects inward in the vehicle width direction from the swinging arm 36 in such a way that its axial direction coincides with the vehicle width direction. Furthermore, a flange portion 42 is integrally formed on the outer peripheral portion of the swinging arm 36 in the section thereof excluding the upper edge interconnecting the front end portion 36B and the rear end portion 36C, and the flange portion 42 is bent inward in the vehicle width direction.

The hinge arm 44 is placed on the vehicle width direction inner side of the swinging arm 36 and extends along the substantially vehicle front and rear direction. Specifically, the hinge arm 44 is equipped with a side wall portion 44A placed substantially parallel to the swinging arm 36. The front end portion of the side wall portion 44A is hinge-joined to the front end portion 36B of the swinging arm 36 by a hinge pin 46 whose axial direction coincides with the vehicle width direction. Because of this, the hinge arm 44 is configured to be relatively rotatable with respect to the swinging arm 36 in the vehicle up and down direction (the direction of arrow C and the direction of arrow D in FIG. 3) using the hinge pin 46 as a rotational center.

Furthermore, the hinge arm 44 is equipped with a top wall portion 44B. The top wall portion 44B is formed bent inward in the vehicle width direction from the upper end portion of the side wall portion 44A and extends in the substantially vehicle front and rear direction along the undersurface of the bulging portion 18 of the hood 12. An attachment hole not shown in the drawings is formed through the top wall portion 44B, and in correspondence to the attachment hole a weld nut (not shown in the drawings) is secured to the bulging portion 18 of the hood 12. Additionally, a hinge bolt not shown in the drawings is inserted inside the attachment hole from the vehicle lower side and is screwed into the weld nut, and thus the top wall portion 44B is fastened (secured) to the hood 12. Because of this, the hinge base 34 and the hood 12 are coupled to each other by the hinge arm 44 and the swinging arm 36.

Moreover, a coupling shaft 48 for coupling a piston rod 70 of the actuator 50 described later is integrally disposed on the rear end portion of the side wall portion 44A of the hinge arm 44. The coupling shaft 48 is formed in a substantially cylindrical shape and projects inward in the vehicle width direction from the side wall portion 44A.

It should be noted that the hood hinge 32 is originally a hinge part for supporting the hood 12 on the body (vehicle body) in such a way that the hood 12 can be opened and closed, but in the present embodiment the hood hinge 32 is also a constituent element of the vehicle pop-up hood device 10. That is, when normally opening and closing the hood 12, the swinging arm 36 is rotated using the hinge pin 38 as a rotational center in a state in which relative rotation of the hinge arm 44 with respect to the swinging arm 36 is regulated by the actuator 50 described later.

### (Regarding Actuator 50)

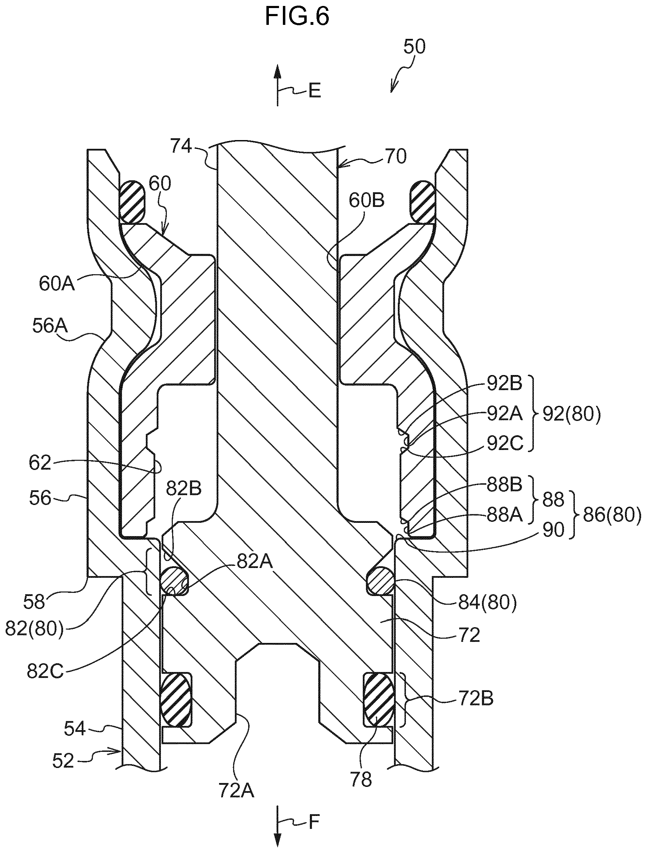

As shown in FIG. 3 and FIG. 4, the actuator 50 is placed on the vehicle width direction inner side of the swinging arm 36 and extends in such a way as to bridge the rear end portion of the hinge arm 44 and the lower end portion 36A of the swinging arm 36. That is to say, the actuator 50 is inclined toward the vehicle rear side heading toward the vehicle upper side as seen in a side view. Additionally, the actuator 50 has a cylinder 52, a piston rod 70 housed inside the cylinder 52, and a lock mechanism 80 (see FIG. 6).

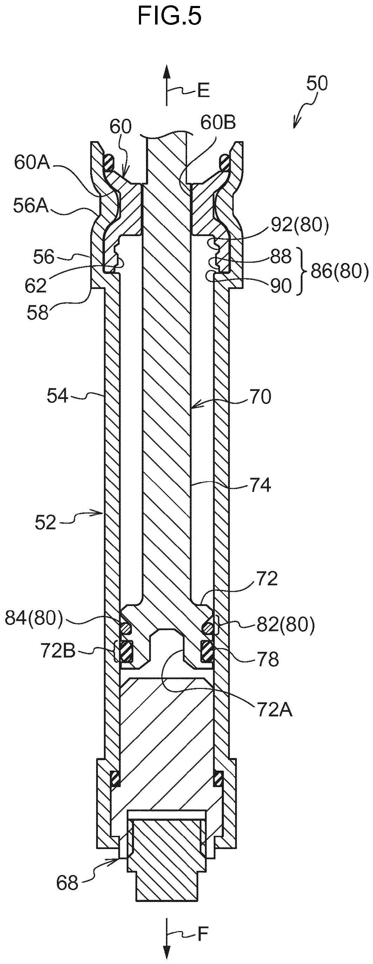

The cylinder 52 is configured to include a cylinder body 54, which is configured by a pipe having a substantially tubular shape, and a head portion 60 (see FIG. 5), which is disposed in the upper end portion of the cylinder body 54. Furthermore, an attachment bracket 66 is secured to the cylinder body 54. The attachment bracket 66 is formed in a substantially rectangular plate shape whose lengthwise direction coincides with the axial direction of the cylinder body 54 as seen in a side view and, seen from the lengthwise direction thereof, is bent in a substantially square U-shape that opens inward in the vehicle width direction. Additionally, the lower end portion of the attachment bracket 66 projects beyond the cylinder body 54 toward the vehicle lower side and is rotatably supported on the coupling shaft 40 of the swinging arm 36. Because of this, the lower end portion of the actuator 50 is configured to be relatively rotatable with respect to the swinging arm 36.

As shown in FIG. 5, an enlarged diameter portion 56 in which the head portion 60 described later is placed is formed in the upper end portion (the end portion on the side of the direction of arrow E in FIG. 5) of the cylinder body 54. Specifically, a step portion 58 bent in a substantially crank shape outward in the radial direction of the cylinder body 54 as seen in a sectional view is formed in the upper end portion of the cylinder body 54, and because of this the enlarged diameter portion 56 having an enlarged diameter with respect to the cylinder body 54 is formed. Additionally, in the inner peripheral surface of the step portion 58, a surface placed along a direction orthogonal to the axial direction of the cylinder 52 is an orthogonal surface 90 (see FIG. 6 for details) configuring a lock groove portion 86 of the lock mechanism 80 described later.

Furthermore, a gas generation device 68 is disposed in the lower end portion (the end portion on the side of the direction of arrow F in FIG. 5) of the cylinder body 54. The gas generation device 68 is formed in a substantially cylindrical shape and is fitted inside the cylinder body 54 in such a way as to close off the lower end portion of the cylinder body 54. The gas generation device 68 is electrically connected to an ECU (control means) not shown in the drawings, and the ECU is electrically connected to a collision detection sensor that detects a collision with an impactor such as a pedestrian. Furthermore, the gas generation device 68 is configured to be actuated by the control of the ECU, and when the gas generation device 68 is actuated, a gas generated by the gas generation device 68 is supplied inside the cylinder body 54.

As shown also in FIG. 6, the head portion 60 is formed in a substantially tubular shape and is placed coaxially inside the enlarged diameter portion 56 of the cylinder body 54. Furthermore, a swage groove portion 60A that opens outward in the radial direction of the head portion 60 is formed in the outer peripheral portion of the head portion 60. The swage groove portion 60A extends along the circumferential direction of the head portion 60 and is formed spanning the entire circumference of the head portion 60. Additionally, in a state in which the head portion 60 has been fitted inside the enlarged diameter portion 56 of the cylinder body 54, part of the enlarged diameter portion 56 is swaged in such a way as to fit inside the swage groove portion 60A, and thus the cylinder body 54 and the head portion 60 are integrated. Because of this, a swage portion 56A is formed in the enlarged diameter portion 56 of the cylinder body 54 along the circumferential direction of the cylinder body 54.

Furthermore, a circular pass-through hole 60B through which a rod portion 74 of the piston rod 70 described later is passed is formed through the axial center portion of the head portion 60. Moreover, a housing recess portion 62 that opens toward the lower end side of the cylinder body 54 is formed in the lower end portion of the head portion 60. The housing recess portion 62 is formed in a circular shape as seen from the lower end side of the head portion 60, and the inner diameter dimension of the housing recess portion 62 is set slightly larger than the inner diameter dimension of the cylinder body 54.

The piston rod 70 is formed in a substantially rod shape, is placed coaxially with the cylinder body 54, and is housed inside the cylinder body 54. Furthermore, the piston rod 70 is configured to include a piston portion 72, which configures the lower end portion of the piston rod 70, and a rod portion 74, which extends from the piston portion 72 along the axial direction of the cylinder 52 toward the vehicle upper side.

The piston portion 72 is formed in a substantially cylindrical shape. The diameter dimension of the piston portion 72 is set slightly smaller than the inner diameter dimension of the housing recess portion 62 of the head portion 60 and the inner diameter dimension of the cylinder body 54, and the piston portion 72 is housed inside the cylinder body 54. Furthermore, a piston recess portion 72A that opens toward the lower end side of the cylinder body 54 is formed in the lower end portion of the piston portion 72. Moreover, a seal groove portion 72B that opens outward in the radial direction of the piston portion 72 is formed in the outer peripheral portion of the lower end portion of the piston portion 72. The seal groove portion 72B extends along the circumferential direction of the piston portion 72 and is formed spanning the entire circumference of the piston portion 72. Additionally, an O-ring 78 configured by a rubber material, for example, is placed inside the seal groove portion 72B, and the space between the piston portion 72 and the cylinder body 54 is sealed by the O-ring 78.

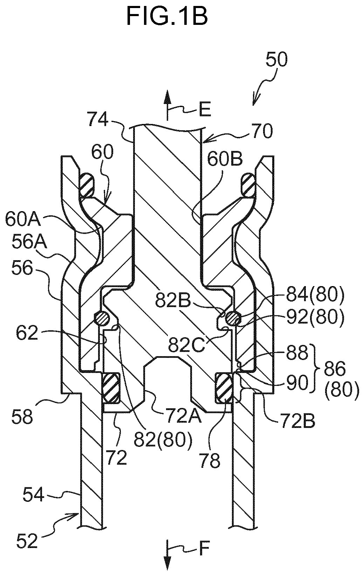

Additionally, when the gas generated by the gas generation device 68 is supplied inside the cylinder body 54, the piston portion 72 (the piston rod 70) is raised toward the side in the direction of arrow E in FIG. 5 along the axial direction of the cylinder body 54 by the gas pressure inside the cylinder body 54. Furthermore, because the diameter dimension of the piston portion 72 is set smaller than the inner diameter dimension of the housing recess portion 62 of the head portion 60 as mentioned above, the upper portion of the piston portion 72 is configured in such a way that it can be placed inside the housing recess portion 62 when the piston rod 72 has risen (see FIG. 1B).

The rod portion 74 is formed in a cross-sectionally circular rod shape and extends from the piston portion 72 along the axial direction of the cylinder body 54 toward the vehicle upper side. The diameter dimension of the rod portion 74 is set slightly smaller than the inner diameter dimension of the pass-through hole 60B in the head portion 60, the rod portion 74 passes through the inside of the pass-through hole 60B, and the upper end portion of the rod portion 74 projects beyond the cylinder 52 toward the vehicle upper side.

As shown in FIG. 3 and FIG. 4, a rod coupling portion 76 is integrally disposed on the upper end portion of the rod portion 74, and the rod coupling portion 76 is formed in a substantially tubular shape whose axial direction coincides with the vehicle width direction. Additionally, the coupling shaft 48 of the hinge arm 44 is inserted inside the rod coupling portion 76, and the upper end portion of the rod portion 74 is coupled to the hinge arm 44 in such a way that it is relatively rotatable with respect to the hinge arm 44.

As shown in FIG. 6, the lock mechanism 80 is configured to include a housing groove portion 82 formed in the piston rod 70, a lock ring 84 disposed on the piston rod 70, and a lock groove portion 86 and a retention groove portion 92 formed in the cylinder 52.

The housing groove portion 82 is formed in the outer peripheral portion of the upper portion of the piston portion 72 of the piston rod 70, extends along the circumferential direction of the piston portion 72, and is formed spanning the entire circumference of the piston portion 72. Furthermore, the housing groove portion 82 is formed in a cross-sectionally substantially trapezoidal shape that opens outward in the radial direction of the piston portion 72. Specifically, the housing groove portion 82 is configured to include a bottom surface 82A placed along the axial direction of the piston portion 72 as seen in a sectional view, an inclined surface 82B inclined toward the upper end side of the cylinder 52 (the side in the direction of arrow E in FIG. 6) heading outward in the radial direction of the piston portion 72 from the upper end of the bottom surface 82A, and an orthogonal surface 82C that extends outward in the radial direction of the piston portion 72 from the lower end of the bottom surface 82A.

The lock ring 84 is configured by a wire made of metal having a cross-sectionally circular shape and is formed in a partially open annular shape. In other words, the lock ring 84 is formed in a substantially C-shape. Furthermore, the lock ring 84 is configured to be elastically deformable in its radial direction. Additionally, the lock ring 84 is reduced in diameter from its natural state (a state in which the lock ring 84 is not elastically deformed) and housed inside the housing groove portion 82 of the piston portion 72. That is to say, the lock ring 84 is placed between the housing groove portion 82 and the cylinder body 54.

The lock groove portion 86 is configured by a step portion 88 formed in the housing recess portion 62 of the head portion 60 and an orthogonal surface 90 in the enlarged diameter portion 56 of the cylinder body 54. The step portion 88 is formed spanning the entire circumference of the open edge portion on the inner peripheral side of the housing recess portion 62, opens inward in the radial direction of the head portion 60, and opens toward the lower end side of the head portion 60. Specifically, the step portion 88 is configured to include a bottom surface 88A placed along the axial direction of the head portion 60 as seen in a sectional view and an inclined surface 88B inclined toward the upper end side of the cylinder 52 heading inward in the radial direction of the head portion 60 from the upper end of the bottom surface 88A. Additionally, the step portion 88 is placed adjacent to the orthogonal surface 90 of the cylinder body 54 on the upper end side of the cylinder 52, and the lock groove portion 86 that opens inward in the radial direction of the head portion 60 is formed by the step portion 88 and the orthogonal surface 90.

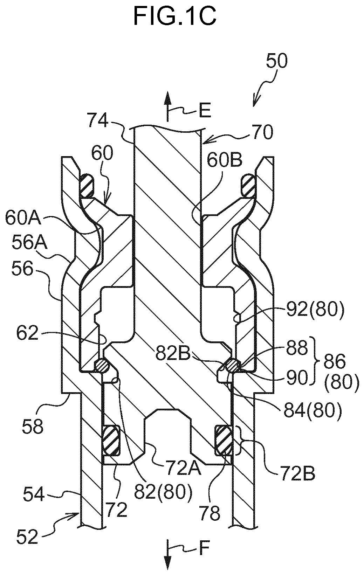

Furthermore, as shown in FIG. 1C, the lock ring 84 can fit inside the lock groove portion 86, and when the lock ring 84 has been fitted into the lock groove portion 86, movement (retraction) of the raised piston rod 70 toward the vehicle lower side is deterred. Specifically, the lock ring 84 becomes sandwiched between the inclined surface 82B of the housing groove portion 82 of the piston portion 72 and the orthogonal surface 90 of the lock groove portion 86, and movement of the piston rod 70 toward the vehicle lower side is deterred. Additionally, the position shown in FIG. 1C is a lock position and is a position at which the pushed-up hood 12 is finally supported by the actuator 50. It should be noted that movement of the piston rod 70 from the lock position toward the vehicle upper side is made possible as a result of the lock ring 84 being housed inside the housing groove portion 82 of the piston portion 72.

As shown in FIG. 6, the retention groove portion 92 is formed in the inner peripheral portion of the housing recess portion 62 of the head portion 60 and is placed more on the upper end side of the cylinder 52 than the step portion 88. That is, the lock groove portion 86 is placed on the vehicle lower side of the retention groove portion 92. The retention groove portion 92 extends along the circumferential direction of the head portion 60 and is formed spanning the entire circumference of the head portion 60. Furthermore, the retention groove portion 92 is formed in a cross-sectionally U-shape that opens inward in the radial direction of the head portion 60. Specifically, the retention groove portion 92 is configured to include a bottom surface 92A placed along the axial direction of the head portion 60 as seen in a sectional view, an upper inclined surface 92B inclined toward the upper end side of the cylinder 52 heading inward in the radial direction of the head portion 60 from the upper end of the bottom surface 92A, and a lower inclined surface 92C inclined toward the lower end side of the cylinder 52 heading inward in the radial direction of the head portion 60 from the lower end of the bottom surface 92A.

Furthermore, as shown in FIG. 1B, the lock ring 84 can be fitted into the retention groove portion 92, and the piston rod 70 becomes temporarily retained when the lock ring 84 has been fitted into the retention groove portion 92. Specifically, the lock ring 84 fitted into the retention groove portion 92 comes into contact with the inclined surface 82B or the orthogonal surface 82C of the housing groove portion 82 of the piston portion 72, and thus movement of the piston portion 72 in the axial direction with respect to the cylinder 52 is limited. Because of this, the raised piston rod 70 is temporarily retained in a position (hereinafter this position will be called a "retention position") on the vehicle upper side of the lock position. It should be noted that in FIG. 1B the lock ring 84 is shown away from the inclined surface 82B and the orthogonal surface 82C for the sake of convenience. Furthermore, in the retention position the upper surface of the piston portion 72 comes into contact with the bottom surface of the housing recess portion 62 of the head portion 60. Moreover, when a predetermined load toward the vehicle lower side acts on the piston rod 70 in the retention position, the lock ring 84 becomes elastically deformed in such a way as to become housed inside the housing groove portion 82 and the state in which the lock ring 84 is fitted into the retention groove portion 92 (the state in which the piston rod 70 is temporarily retained) becomes cancelled. This will be specifically described later, but the state in which the lock ring 84 is fitted into the retention groove portion 92 becomes cancelled at bottom dead center or near bottom dead center of the oscillation that occurs in the hood 12.

Next, the action and effects of the present embodiment will be described.

The state shown in FIG. 3 is a non-actuated state of the vehicle pop-up hood device 10. At the time of this state, the actuator 50 is in a non-actuated state, so most of the piston rod 70 is housed inside the cylinder body 54. Furthermore, the rod coupling portion 76 (the upper end portion) of the piston rod 70 is rotatably coupled to the coupling shaft 48 (the rear end portion) of the hinge arm 44.

From this state, when the vehicle is involved in a frontal collision with an impactor such as a pedestrian, the fact that the vehicle has become involved in a frontal collision with an impactor is detected by the collision detection sensor and a collision signal is output to the ECU. The ECU judges whether or not it should actuate the vehicle pop-up hood device 10 on the basis of the collision signal that has been input, and when the ECU judges that it should actuate the vehicle pop-up hood device 10, an actuation signal is output to the actuator 50. Because of this, the gas generation device 68 of the actuator 50 is actuated and the gas is supplied inside the cylinder body 54.

When the gas is supplied inside the cylinder body 54, the piston portion 72 is pushed by the gas pressure inside the cylinder body 54 and the piston rod 70 moves (rises) in its axial direction toward the vehicle upper side inside the cylinder body 54. When the piston rod 70 moves in its axial direction toward the vehicle upper side, the piston rod 70 pushes up the rear end portion of the hinge arm 44 toward the vehicle upper side and both vehicle width direction end portions of the hood 12 are pushed up (see FIG. 4). At this time, the hinge arm 44 is relatively rotated toward the vehicle upper side with respect to the swinging arm 36, and the swinging arm 36 is relatively rotated toward the vehicle upper side with respect to the hinge base 34.

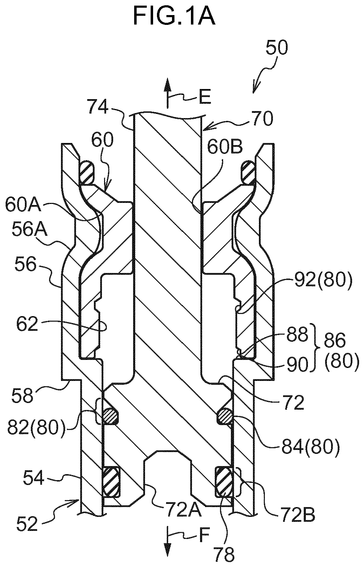

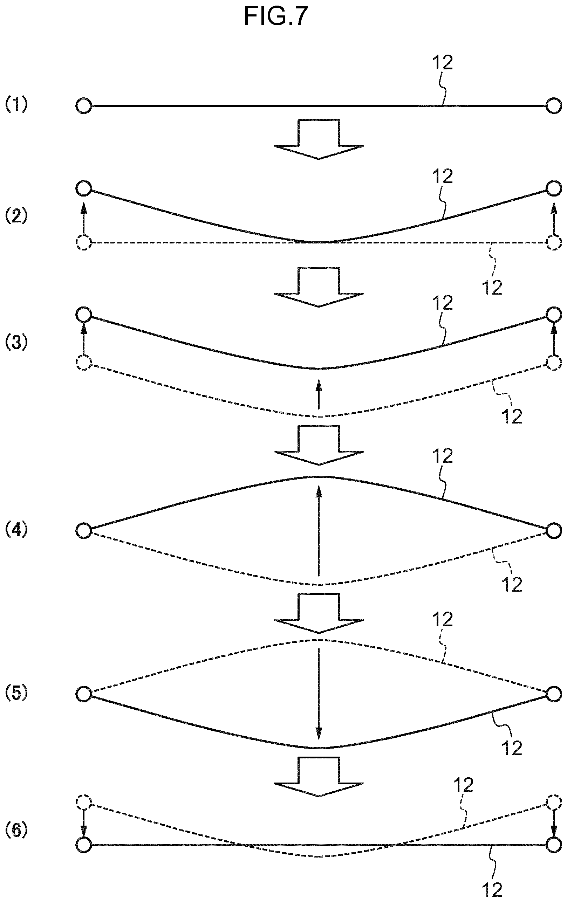

Next, the relationship between the behavior of the hood 12 and the actuated state of the lock mechanism 80 when the actuator 50 (the pop-up mechanism portion 30) has pushed up both vehicle width direction end portions of the hood 12 will be described using FIG. 1 and FIG. 7. It should be noted that FIG. 7 schematically shows by means of a time series the state of the hood 12 seen from the vehicle rear side when the actuator 50 has pushed up the hood 12, and both vehicle width direction end portions of the hood 12 are indicated by unfilled circles.

State (1) shown in FIG. 7 represents a state before the actuator 50 pushes up the hood 12. In this state, the actuator 50 is in a non-actuated state, so the piston portion 72 of the piston rod 70 is placed on the lower end side of the cylinder body 54.

Then, when the actuator 50 is actuated, the piston rod 70 (the piston portion 72) is instantaneously moved in its axial direction (see FIG. 1A) and is raised to the retention position (see FIG. 1B). At this time, the upper surface of the piston portion 72 is brought into contact with the bottom surface of the housing recess portion 62 of the head portion 60. Furthermore, the lock ring 84 housed inside the housing groove portion 82 of the piston portion 72 becomes elastically deformed outward in its radial direction and fitted into the retention groove portion 92 of the head portion 60. Additionally, the inclined surface 82B of the housing groove portion 82 of the piston portion 72 comes into contact with the lock ring 84 and movement of the piston rod 70 toward the vehicle lower side (the side in the direction of arrow F in FIG. 1) is limited. Because of this, the piston rod 70 is temporarily retained in the retention position.

When the hood 12 is pushed up by the actuator 50, the force of inertia acts on the vehicle width direction central portion of the hood 12, so during the initial stage when the hood 12 is pushed by the piston rod 70, only both vehicle width direction end portions of the hood 12 are pushed up (see state (2) in FIG. 7). Then, the vehicle width direction central portion of the hood 12 becomes displaced toward the vehicle upper side later than both vehicle width direction end portions of the hood 12 (see state (3) in FIG. 7).

Moreover, the displacement of the vehicle width direction central portion of the hood 12 in the vehicle up and down direction is not limited, so the vehicle width direction central portion of the pushed-up hood 12 becomes displaced toward the vehicle upper side of the retention position by the force of inertia. Furthermore, the displacement of both vehicle width direction end portions of the hood 12 toward the vehicle upper side is limited by the actuator 50. For this reason, at the point in time when the vehicle width direction central portion of the hood 12 has reached top dead center (see state (4) in FIG. 7), the vehicle width direction central portion of the hood 12 undergoes a reversal to being displaced toward the vehicle lower side due to reaction. Because of this, seen from the vehicle rear side, the hood 12 tends to undergo simple harmonic motion in such a way that the vehicle width direction central portion of the hood 12 becomes an antinode and both vehicle width direction end portions of the hood 12 become nodes.

Then, the vehicle width direction central portion of the hood 12 that becomes displaced toward the vehicle lower side due to reaction passes from top dead center through the retention position and becomes displaced to bottom dead center (the point at which the hood 12 goes from being displaced toward the vehicle lower side to being displaced toward the vehicle upper side) side (see state (5) in FIG. 7). It should be noted that while the vehicle width direction central portion of the hood 12 is being displaced from state (4) to state (5) in FIG. 7, the lock ring 84 is fitted into the retention groove portion 92 and the state in which the piston rod 70 is temporarily retained by the lock mechanism 80 is maintained. That is to say, both vehicle width direction end portions of the hood 12 are placed in the retention position.

Then, when the vehicle width direction central portion of the hood 12 reaches bottom dead center or near bottom dead center, the state in which the piston rod 70 is temporarily retained by the lock mechanism 80 becomes cancelled and the piston portion 72 moves to the lock position. That is to say, the lock ring 84 becomes elastically deformed inward in its radial direction and housed inside the housing groove portion 82. Then, in accompaniment with the movement of the piston portion 72 toward the lock position side, the lock ring 84 moves toward the lock position side while sliding on the inner peripheral surface of the housing recess portion 62 (see FIG. 1C). Because of this, both vehicle width direction end portions of the hood 12 become displaced to the lock position (see (6) in FIG. 7) and the hood 12 becomes substantially horizontal. It should be noted that the lock ring 84 that has been moved to the lock position becomes elastically deformed outward in its radial direction and fitted into the lock groove portion 86 of the cylinder 52. Additionally, the lock ring 84 becomes sandwiched between the inclined surface 82B of the housing groove portion 82 of the piston portion 72 and the orthogonal surface 90 of the cylinder 52, and movement of the piston portion 72 toward the vehicle lower side is deterred.

In this way, in the vehicle pop-up hood device 10 pertaining to the present embodiment, the piston rod 70 can be raised to the retention position on the vehicle upper side of the lock position. Furthermore, the piston rod 70 that has been raised to the retention position is temporarily retained by the lock mechanism 80 disposed in the actuator 50 (see FIG. 1B). Additionally, as mentioned above, when, during oscillation of the hood 12 that occurs after the hood 12 has been pushed up by the actuator 50, the vehicle width direction central portion of the hood 12 becomes displaced from top dead center toward the vehicle lower side and reaches bottom dead center or near bottom dead center, the state in which the piston rod 70 is temporarily retained by the lock mechanism 80 becomes cancelled and both vehicle width direction end portions of the hood 12 become displaced to the lock positon (see FIG. 1C). Because of this, strain in the hood 12 is eliminated at the point in time when the oscillation speed of the hood 12 becomes zero, and the hood 12 becomes substantially horizontal. As a result, the amplitude of the hood 12 in the lock position is reduced, so the oscillation that has occurred in the hood 12 can be damped at an early stage.

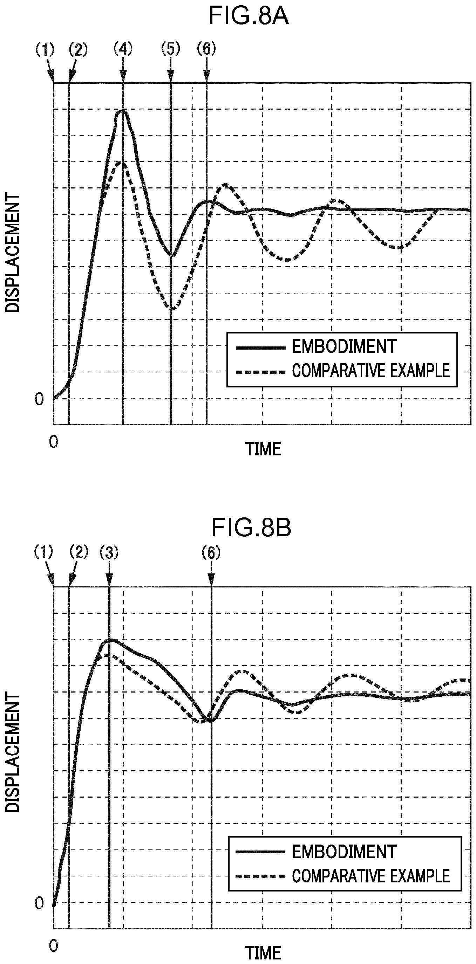

Data in which the present embodiment is compared to a comparative example in regard to this point are shown below in FIG. 8A and FIG. 8B. It should be noted that, in the comparative example, the retention groove portion 92 of the lock mechanism 80 in the present embodiment is omitted. Furthermore, in the comparative example, the movement, toward the vehicle upper side, of the piston portion 72 raised to the lock position is limited. Additionally, FIG. 8A shows, together with the comparative example, the oscillation waveform in the vehicle width direction central portion of the rear end portion of the hood 12, with the oscillation waveform indicted by the solid line being the oscillation waveform of the present embodiment and the oscillation waveform indicated by the dashed line being the oscillation waveform of the comparative example. Furthermore, FIG. 8B shows, together with the comparative example, the oscillation waveform in both vehicle width direction end portions (directly over the pop-up mechanism portions 30) of the rear end portion of the hood 12, with the oscillation waveform indicted by the solid line being the oscillation waveform of the present embodiment and the oscillation waveform indicated by the dashed line being the oscillation waveform of the comparative example. Furthermore, in the graphs shown in FIG. 8A and FIG. 8B, the horizontal axis represents time and the vertical axis represents displacement. Moreover, points in time (1) to (6) shown in FIG. 8A and FIG. 8B correspond to states (1) to (6) in FIG. 7.

Additionally, as shown in FIG. 8A, in the present embodiment, the amplitude (swing) in the vehicle width direction central portion of the hood 12 when the vehicle width direction central portion of the hood 12 has been displaced to bottom dead center (point in time (5) in FIG. 8A) is greatly reduced compared to the comparative example. Moreover, in the present embodiment, the amplitude of the vehicle width direction central portion of the hood 12 becomes smaller than in the comparative example after the cancellation of the state in which the piston rod 70 is temporarily retained by the lock mechanism 80 (after point in time (6) in FIG. 8A). Furthermore, as shown in FIG. 8B, in the present embodiment, the amplitude of both vehicle width direction end portions of the hood 12 becomes smaller than in the comparative example after the cancellation of the state in which the piston rod 70 is temporarily retained by the lock mechanism 80 (after point in time (6) in FIG. 8B). Because of this, the oscillation that has occurred in the hood 12 can be damped at an early stage.

Furthermore, in the present embodiment, the retention groove portion 92 is formed in (the head portion 60 of) the cylinder 52, in the retention position the lock ring 84 becomes fitted into the retention groove portion 92, and the piston portion 72 (the piston rod 70) is temporarily retained in the retention position. For this reason, the efficiency with which the piston rod 70 is temporarily retained in the retention position can be enhanced with a simple configuration. Furthermore, by appropriately adjusting the shape and depth of the retention groove portion 92, the timing when the state in which the piston rod 70 is temporarily retained in bottom dead center or near bottom dead center becomes cancelled, for example, can be easily adjusted.

Moreover, the lock groove portion 86 is formed in the cylinder 52, and in the lock position the lock ring 84 becomes fitted into the lock groove portion 86. For this reason, movement, toward the vehicle upper side, of the lock ring 84 that has been moved from the retention position to the lock position can be prevented. Because of this, the lock ring 84 is kept from moving again toward the retention position side due to a rebound, so rebounding of the hood 12 in the lock position can be prevented.

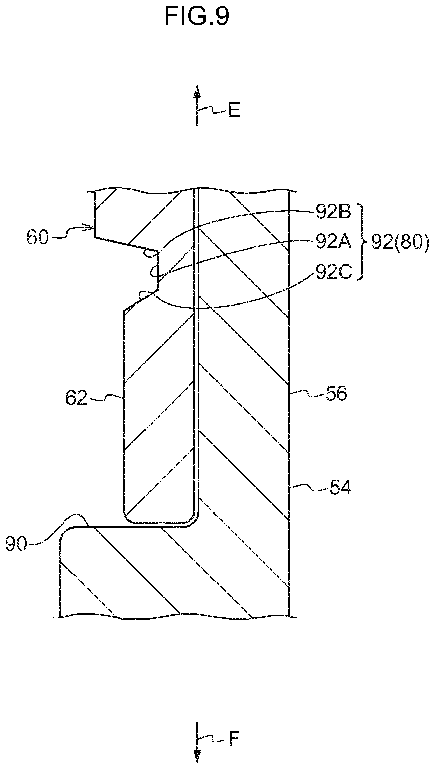

It should be noted that although in the present embodiment the lock groove portion 86 is configured by the step portion 88 formed in the head portion 60 and the orthogonal surface 90 formed in the cylinder body 54, the step portion 88 may also be omitted from the head portion 60 as shown in FIG. 9. In this case also, in the lock position the lock ring 84 becomes sandwiched by the inclined surface 82B (not shown in FIG. 9) of the housing groove portion 82 in the piston portion 72 and the orthogonal surface 90 of the cylinder body 54 and thus movement of the piston rod 70 toward the vehicle lower side can be limited.

Furthermore, in the present embodiment, the cross-sectional shape of the retention groove portion 92 is formed in a substantially U-shape, but the cross-sectional shape of the retention groove portion 92 is not limited to this. For example, the upper inclined surface 92B of the retention groove portion 92 may be placed in a direction orthogonal to the axial direction of the cylinder 52, so that the cross-sectional shape of the retention groove portion 92 is formed in a substantially trapezoidal shape.

Moreover, in the present embodiment, the hood hinge 32 is configured to include the hinge base 34, the swinging arm 36, and the hinge arm 44, but the swinging arm 36 may also be omitted from the hood hinge 32. That is to say, the hood hinge 32 may be configured in such a way that the hinge arm 44 is rotatably coupled to the hood hinge 32, the actuator 50 is secured to the vehicle body or the hinge base 34, and the hood 12 or the hinge arm 44 is pushed up by the piston rod 70.

Furthermore, in the present embodiment, the actuator 50 is configured to push up both vehicle width direction end portions of the rear end portion of the hood 12, but the actuator 50 may also be applied to a type of vehicle in which the front end portion of the hood 12 is pushed up. For example, the actuator 50 may also be configured in such a way that the actuator 50 is secured to the vehicle body and the front end portion of the hood 12 is pushed up by the actuator 50.

## Claims

1. A vehicle pop-up hood device (10) comprising:
a pair of actuators (50) respectively having a piston rod (70) that, upon actuation, becomes extended from a cylinder (52) toward the vehicle upper side and is configured to push up both vehicle width direction end portions of a hood (12); and
a lock mechanism (80) that:
is disposed in the respective actuator (50) and comprises:
a housing groove portion (82) formed along the circumferential direction of a piston portion (72) is formed in an outer peripheral portion of the piston portion (72), and
a retention groove portion (92) that is formed in an inner peripheral portion of the cylinder (52) along the circumferential direction of the cylinder (52), and that is configured to temporarily retain the piston rod (70) extended from the cylinder (52) in a retention position via a lock ring (84),
wherein the lock ring (84) is made of metal having an annular shape, is configured to be elastically deformable in its radial direction, is housed in the housing groove portion in a diameter-reduced state, and in the retention position becomes fitted into the retention groove portion (92),
wherein cancellation of the temporary retention of the piston in the retention position occurs when a predetermined load acts on the piston rod toward the vehicle lower side, and
whereby the lock mechanism is configured to deter movement of the piston rod (70) toward the vehicle lower side as a result of the lock ring (84) being placed in a lock position on the vehicle lower side of the retention position on the lower end side of the cylinder (52) with respect to the retention groove portion (92).

2. The vehicle pop-up hood device (10) according to claim 1, wherein
the piston rod (70) is configured to include a rod portion (74) that is configured to push up the hood (12).

3. The vehicle pop-up hood device (10) according to claim 2, wherein a side surface on the vehicle lower side of the retention groove portion (92) is a lower inclined surface, the lower inclined surface being inclined toward the lower end side of the cylinder (52) heading inward in the radial direction of the cylinder (52) as seen in a longitudinal sectional view.

4. The vehicle pop-up hood device (10) according to claim 2 or claim 3, wherein
the lock mechanism (80) has a lock groove portion (86) formed in the inner peripheral portion of the cylinder (52) along the circumferential direction of the cylinder (52), and
in the lock position the lock ring (84) is configured to become fitted into the lock groove portion (86).

5. The vehicle pop-up hood device (10) according to claim 4, wherein
a side surface on the vehicle upper side of the housing groove portion (82) is an inclined surface, the inclined surface being inclined toward the upper end side of the cylinder (52) heading outward in the radial direction of the piston portion (72) as seen in a longitudinal sectional view, and
a side surface on the vehicle lower side of the lock groove portion (86) is an orthogonal surface, the orthogonal surface being placed along a direction orthogonal to the axial direction of the cylinder (52) as seen in a longitudinal sectional view.

6. The vehicle pop-up hood device (10) according to claim 5, wherein
a head portion (60) having a housing recess portion (62) that opens toward the lower end side of the cylinder (52) is secured inside the upper end portion of the cylinder (52),
a step portion that opens inward in the radial direction of the cylinder (52) and toward the lower end side of the cylinder (52) is formed in an open edge portion of the housing recess portion (62), and
the retention groove portion (92) is formed in an inner peripheral surface of the housing recess portion (62) and the lock groove portion (86) is configured by the orthogonal surface and the step portion.

7. The vehicle pop-up hood device (10) according to claim 3, wherein
the lock mechanism (86) has an orthogonal surface that is formed in the inner peripheral portion of the cylinder (52) along the circumferential direction of the cylinder (52) and is placed along a direction orthogonal to the axial direction of the cylinder (52) as seen in a longitudinal sectional view,
a head portion (60) is secured inside the upper end portion of the cylinder (52), with a housing recess portion (62) that opens toward the lower end side of the cylinder (52) and whose open edge portion is placed adjacent to the orthogonal surface on the upper end side of the cylinder (52) being formed in the head portion (60), and
the retention groove portion (92) is formed in an inner peripheral surface of the housing recess portion (62) and in the lock position the lock ring (84) is configured to become sandwiched between an inclined surface on the vehicle upper side of the housing groove portion (82) and the orthogonal surface so that movement of the piston rod (70) toward the vehicle lower side is deterred.

8. The vehicle pop-up hood device (10) according to claim 6 or claim 7, wherein when the piston rod (70) has been moved to the retention position, the piston portion (72) is brought into contact with a bottom surface of the housing recess portion (62).

## Patentansprüche

1. Fahrzeugaufstellhaubenvorrichtung (10), die aufweist:
ein Paar Aktuatoren (50), die jeweilig eine Kolbenstange (70) haben, die bei Betätigung aus dem Zylinder (52) zu der fahrzeugoberen Seite hin erweitert werden und konfiguriert sind, um beide Fahrzeugbreitenrichtungsendabschnitte einer Haube (12) hochzustoßen, und
einen Verriegelungsmechanismus (80), der:
in dem jeweiligen Aktuator (50) angeordnet ist und aufweist:
einen entlang der Umfangsrichtung eines Kolbenabschnitts (72) gebildeten Gehäusenutabschnitt (82), der in einem Außenumfangsabschnitt des Kolbenabschnitts (72) gebildet ist, und
einen Zurückhaltenutabschnitt (92), der entlang der Umfangsrichtung des Zylinders (52) in einem Innenumfangsabschnitt des Zylinders (52) gebildet ist und der konfiguriert ist, um die Kolbenstange (70), die von dem Zylinder (52) erweitert ist, über einen Verriegelungsring (84) zeitweilig in einer Zurückhalteposition zurückzuhalten,
wobei der Verriegelungsring (84) aus Metall gefertigt ist, das eine ringförmige Form hat, konfiguriert ist, um in seiner Radialrichtung elastisch verformbar zu sein, in dem Gehäusenutabschnitt in einem Durchmesser-reduziert-Zustand untergebracht ist und in der Zurückhalteposition in den Zurückhaltenutabschnitt (92) eingepasst wird,
wobei ein Abbruch der zeitweiligen Zurückhaltung des Kolbens in der Zurückhalteposition vorkommt, wenn eine vorbestimmte Last auf die Kolbenstange zu der fahrzeugunteren Seite hin wirkt, und
wobei der Verriegelungsmechanismus konfiguriert ist, um eine Bewegung der Kolbenstange (70) zu der fahrzeugunteren Seite hin als Folge dessen, dass der Verriegelungsring (84) in einer Verriegelungsposition auf der fahrzeugunteren Seite von der Zurückhalteposition auf der unteren Endseite des Zylinders (52) mit Bezug auf den Zurückhaltenutabschnitt (92) platziert ist, zu verhindern.

2. Fahrzeugaufstellhaubenvorrichtung (10) gemäß Anspruch 1, wobei
die Kolbenstange (70) konfiguriert ist, um einen Stangenabschnitt (74), der konfiguriert ist, um die Haube (12) hochzustoßen, zu enthalten.

3. Fahrzeugaufstellhaubenvorrichtung (10) gemäß Anspruch 2, wobei eine Seitenfläche auf der fahrzeugunteren Seite des Zurückhaltenutabschnitts (92) eine untere geneigte Fläche ist, wobei die untere geneigte Fläche zu der unteren Endseite des Zylinders (52), die in der Radialrichtung des Zylinders (52) nach innen führt, hin geneigt ist, wie es in einer Längsschnittansicht zu sehen ist.

4. Fahrzeugaufstellhaubenvorrichtung (10) gemäß Anspruch 2 oder Anspruch 3, wobei
der Verriegelungsmechanismus (80) einen Verriegelungsnutabschnitt (86) hat, der entlang der Umfangsrichtung des Zylinders (52) in dem Innenumfangsabschnitt des Zylinders (52) gebildet ist, und
in der Verriegelungsposition der Verriegelungsring (84) konfiguriert ist, um in den Verriegelungsnutabschnitt (86) eingepasst zu werden.

5. Fahrzeugaufstellhaubenvorrichtung (10) gemäß Anspruch 4, wobei
eine Seitenfläche auf der fahrzeugoberen Seite des Gehäusenutabschnitts (82) eine geneigte Fläche ist, wobei die geneigte Fläche zu der oberen Endseite des Zylinders (52), die in der Radialrichtung des Kolbenabschnitts (72) nach außen führt, hin geneigt ist, wie es in einer Längsschnittansicht zu sehen ist, und
eine Seitenfläche auf der fahrzeugunteren Seite des Verriegelungsnutabschnitts (86) eine senkrechte Fläche ist, wobei die senkrechte Fläche entlang einer Richtung, die senkrecht zu der Axialrichtung des Zylinders (52) ist, platziert ist, wie es in einer Längsschnittansicht zu sehen ist.

6. Fahrzeugaufstellhaubenvorrichtung (10) gemäß Anspruch 5, wobei
ein Kopfabschnitt (60), der einen Gehäuseaussparungsabschnitt (62) hat, der sich zu der unteren Endseite des Zylinders (52) hin öffnet, innerhalb des oberen Endabschnitts des Zylinders (52) gesichert ist,
ein Stufenabschnitt, der sich in der Radialrichtung des Zylinders (52) nach innen und zu der unteren Endseite des Zylinders (52) hin öffnet, in einem Öffnungskantenabschnitt des Gehäuseaussparungsabschnitts (62) gebildet ist, und
der Zurückhaltenutabschnitt (92) in einer Innenumfangsfläche des Gehäuseaussparungsabschnitts (62) gebildet ist und der Verriegelungsnutabschnitt (86) durch die senkrechte Fläche und den Stufenabschnitt konfiguriert ist.

7. Fahrzeugaufstellhaubenvorrichtung (10) gemäß Anspruch 3, wobei
der Verriegelungsmechanismus (86) eine senkrechte Fläche hat, die entlang der Umfangsrichtung des Zylinders (52) in dem Innenumfangsabschnitt des Zylinders (52) gebildet ist und entlang einer Richtung platziert ist, die senkrecht zu der Axialrichtung des Zylinders (52) ist, wie es in einer Längsschnittansicht zu sehen ist,
ein Kopfabschnitt (60) innerhalb des oberen Endabschnitts des Zylinders (52) gesichert ist, wobei ein Gehäuseaussparungsabschnitt (62) hat, der sich zu der unteren Endseite des Zylinders (52) hin öffnet und dessen Öffnungskantenabschnitt benachbart zu der senkrechten Fläche auf der oberen Endseite des Zylinders (52) platziert ist, in dem Kopfabschnitt (60) gebildet ist, und
der Zurückhaltenutabschnitt (92) in einer Innenumfangsfläche des Gehäuseaussparungsabschnitts (62) gebildet ist und in der Verriegelungsposition der Verriegelungsring (84) konfiguriert ist, um zwischen einer geneigten Fläche auf der fahrzeugoberen Seite des Gehäusenutabschnitts (82) und der senkrechten Fläche zwischengeschichtet zu werden, so dass eine Bewegung der Kolbenstange (70) zu der fahrzeugunteren Seite hin verhindert wird.

8. Fahrzeugaufstellhaubenvorrichtung (10) gemäß Anspruch 6 oder Anspruch 7, wobei, wenn die Kolbenstange (70) zu der Zurückhalteposition bewegt worden ist, der Kolbenabschnitt (72) in Kontakt mit einer Bodenfläche des Gehäuseaussparungsabschnitts (62) gebracht ist.

## Revendications

1. Dispositif de capot télescopique de véhicule (10) comprenant :
une paire d'actionneurs (50) ayant respectivement une tige de piston (70) qui, suite à l'actionnement, est étendue à partir d'un cylindre (52) vers le côté supérieur du véhicule et est configurée pour pousser les deux parties d'extrémité dans le sens de la largeur du véhicule d'un capot (12) ; et
un mécanisme de verrouillage (80) qui :
est disposé dans l'actionneur (50) respectif et comprend :
une partie de rainure de logement (82) formée le long de la direction circonférentielle d'une partie de piston (72) est formée dans une partie périphérique externe de la partie de piston (72), et
une partie de rainure de retenue (92) qui est formée dans une partie périphérique interne du cylindre (52) le long de la direction circonférentielle du cylindre (52) et qui est configurée pour retenir, de manière temporaire, la tige de piston (70) étendue à partir du cylindre (52) dans une position de retenue via une bague de verrouillage (84),
dans lequel la bague de verrouillage (84) est réalisée avec du métal ayant une forme annulaire, est configurée pour être élastiquement déformable dans sa direction radiale, est logée dans la partie de rainure de logement dans un état réduit en diamètre, et dans la position de retenue, est montée dans la partie de rainure de retenue (92),
dans lequel l'annulation de la retenue temporaire du piston dans la position de retenue a lieu lorsqu'une charge prédéterminée agit sur la tige de piston vers le côté inférieur du véhicule, et
moyennant quoi le mécanisme de verrouillage est configuré pour empêcher le mouvement de la tige de piston (70) vers le côté inférieur du véhicule étant donné que la bague de verrouillage (84) est placée dans une position de verrouillage sur le côté inférieur du véhicule de la position de retenue sur le côté d'extrémité inférieure du cylindre (52) par rapport à la partie de rainure de retenue (92).

2. Dispositif de capot télescopique de véhicule (10) selon la revendication 1, dans lequel :
la tige de piston (70) est configurée pour comprendre une partie de tige (74) qui est configurée pour pousser le capot (12) .

3. Dispositif de capot télescopique de véhicule (10) selon la revendication 2, dans lequel une surface latérale du côté inférieur du véhicule de la partie de rainure de retenue (92) est une surface inclinée inférieure, la surface inclinée inférieure étant inclinée vers le côté d'extrémité inférieur du cylindre (52) orienté vers l'intérieur dans la direction radiale du cylindre (52), comme observé sur une vue en coupe longitudinale.

4. Dispositif de capot télescopique de véhicule (10) selon la revendication 2 ou la revendication 3, dans lequel :
le mécanisme de verrouillage (80) a une partie de rainure de verrouillage (86) formée dans la partie périphérique interne du cylindre (52) le long de la direction circonférentielle du cylindre (52), et
dans la position de verrouillage, la bague de verrouillage (84) est configurée pour être montée dans la partie de rainure de verrouillage (86).

5. Dispositif de capot télescopique de véhicule (10) selon la revendication 4, dans lequel :
une surface latérale du côté supérieur du véhicule de la partie de rainure de logement (82) est une surface inclinée, la surface inclinée étant inclinée vers le côté d'extrémité supérieur du cylindre (52) orienté vers l'extérieur dans la direction radiale de la partie de piston (72), comme observé sur une vue en coupe longitudinale, et
une surface latérale du côté inférieur du véhicule de la partie de rainure de verrouillage (86) est une surface orthogonale, la surface orthogonale étant placée le long d'une direction orthogonale à la direction axiale du cylindre (52), comme observé sur une vue en coupe longitudinale.

6. Dispositif de capot télescopique de véhicule (10) selon la revendication 5, dans lequel :
une partie de tête (60) ayant une partie d'évidement de logement (62) qui s'ouvre vers le côté d'extrémité inférieur du cylindre (52), est fixée à l'intérieur de la partie d'extrémité supérieure du cylindre (52),
une partie de gradin qui s'ouvre vers l'intérieur dans la direction radiale du cylindre (52) et vers le côté d'extrémité inférieur du cylindre (52) est formée dans une partie de bord ouvert de la partie d'évidement de logement (62), et
la partie de rainure de retenue (92) est formée dans une surface périphérique interne de la partie d'évidement de logement (62) et la partie de rainure de verrouillage (86) est configurée par la surface orthogonale et la partie de gradin.

7. Dispositif de capot télescopique de véhicule (10) selon la revendication 3, dans lequel :
le mécanisme de verrouillage (86) a une surface orthogonale qui est formée dans la partie périphérique interne du cylindre (52) le long de la direction circonférentielle du cylindre (52) et est placée le long d'une direction orthogonale à la direction axiale du cylindre (52), comme observé sur une vue en coupe longitudinale,
une partie de tête (60) est fixée à l'intérieur de la partie d'extrémité supérieure du cylindre (52), avec une partie d'évidement de logement (62) qui s'ouvre vers le côté d'extrémité inférieur du cylindre (52) et dont la partie de bord ouvert est placée de manière adjacente à la surface orthogonale sur le côté d'extrémité supérieur du cylindre (52) qui est formé dans la partie de tête (60), et
la partie de rainure de retenue (92) est formée dans une surface périphérique interne de la partie d'évidement de logement (62) et dans la position de verrouillage, la bague de verrouillage (84) est configurée pour être prise en sandwich entre une surface inclinée du côté supérieur du véhicule de la partie de rainure de logement (82) et la surface orthogonale de sorte que le mouvement de la tige de piston (70) vers le côté inférieur du véhicule est empêché.

8. Dispositif de capot télescopique de véhicule (10) selon la revendication 6 ou la revendication 7, dans lequel lorsque la tige de piston (70) a été déplacée dans la position de retenue, la partie de piston (72) est amenée en contact avec une surface inférieure de la partie d'évidement de logement (62).
